# EUROPÄISCHE PATENTSCHRIFT

(11) **EP 2 245 924 B1**
(45) Veröffentlichungstag und Bekanntmachung des Hinweises auf die Patenterteilung: **02.05.2012**
(21) Anmeldenummer: 09405074.7
(22) Anmeldetag: 30.04.2009
(51) Int. Cl.: A01K 1/03

(54) **Stall zur Aufzucht von Nagerjungtieren**
Stall for rearing young rodents
Ecurie destinée à l'élevage de jeunes rongeurs

(43) Veröffentlichungstag der Anmeldung: 03.11.2010
(73) Patentinhaber: Odermatt, Meinrad, 8032 Zürich (CH)
(72) Erfinder: Odermatt, Meinrad, 8032 Zürich (CH)
(74) Vertreter: EGLI-EUROPEAN PATENT ATTORNEYS

(56) Entgegenhaltungen:
- FR-A- 2 351 590
- FR-A- 2 534 113
- GB-A- 2 274 572
- US-A- 1 870 957
- US-A- 3 160 140

## Beschreibung

Die Erfindung betrifft das Gebiet der Aufzucht von Tieren und insbesondere die Aufzucht von Kleintieren wie Nagertieren, z.B. Hasen und/oder Kaninchen, in einem Stall nach dem Oberbegriff des Anspruchs 1.

Zur Aufzucht einer möglichst grossen Anzahl von Kleintieren sind bereits Ställe bekannt, die aus einzelnen Gehegen/Boxen bestehen, die einzeln oder in Reihen angeordnet sind und die gemeinsam mit Futter und Wasser versorgt werden können. Die Ställe selbst verfügen über eine Nestkammer, in welche sich die geborenen Jungtiere zurückziehen können. Die Dokumente US 1 870 957, FR 2 534 113 und GB 2 274 572 offenbaren gattungsgemäße Ställe.

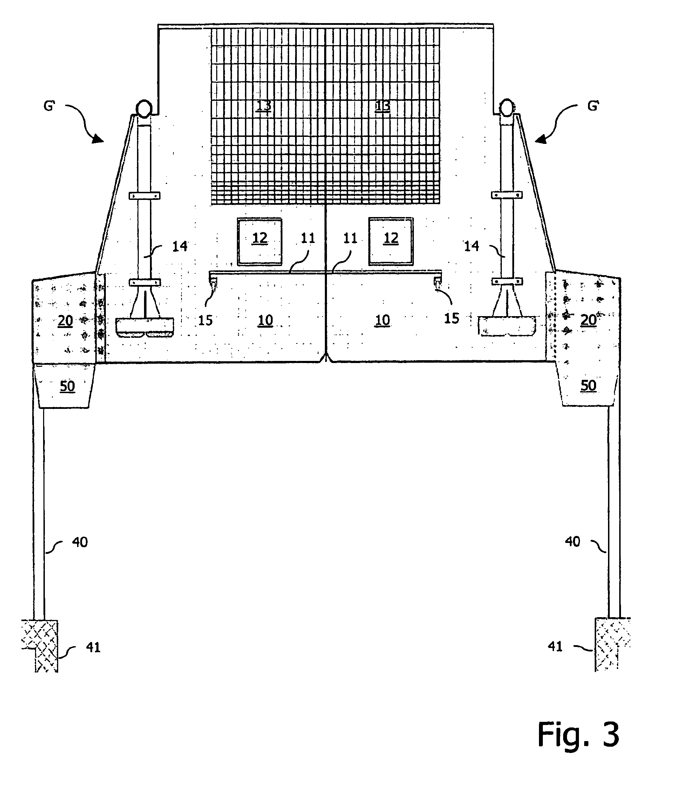

Die Figur 3 zeigt eine seitliche Ansicht von zwei spiegelbildlich zueinander angeordneten Ställen G'. Der jeweilige Stall G' weist ein Gehege 10 mit Zwischenboden 11 auf, der über Öffnungen 12 zugreifbar ist. Oberhalb des Zwischenbodens 11 ist ein keilförmiges Rauhfutterreservoir 13 vorgesehen. Das jeweilige Gehege 10 ist weiterhin mit einer Futter- und Wasserstation 14, 15 bestückt. Die Kleintiere können sich in eine seitengeschützte Nestkammer 20 zurückziehen, die von dem Gehege 10 aus zugänglich ist. Ein darunter angeordneter Nest- oder Muttertierraum 50 ist wiederum über diese Nestkammer 20 zugänglich und mit dieser verbunden. Die kombinierten Ställe G' sind auf einem Gestell 40 gelagert, das sich an einem Fundament 41 abstützt.

Gemäss Tierschutzgesetz bzw. -verordnung muss jedem Tier in einem Gehege ein angemessener Bewegungsraum zur Verfügung stehen. In dem bekannten Gehege würde dies nur durch die Verringerung der Anzahl der Tiere oder durch die Vergrösserung der Gehege möglich sein. Beides würde die Wirtschaftlichkeit der Tierzucht in Frage stellen, da entweder die Umsätze sinken oder die Betriebskosten erhöht würden. Gleichzeitig ergäben sich keine anderweitigen Verbesserungen in der Handhabung des Geheges, welche die erhöhten Kosten rechtfertigen würden.

Es ist Aufgabe der vorliegenden Erfindung, einen Stall zur Aufzucht von Jungtieren, insbesondere von Nagertieren wie z. B. Hasen und/oder Kaninchen bereitzustellen, der zum einen den Tierschutzvorschriften bzw. -Normen genügt und zum anderen eine verbesserte Handhabung zulässt, und der zudem konstruktiv einfach gestaltet und relativ kostengünstig herstellbar ist.

Ausgehend von dem bekannten Stand der Technik wird diese Aufgabe durch einen Stall mit den kennzeichnenden Merkmalen des Anspruchs 1 gelöst.

Ein wesentlicher Punkt der Erfindung besteht dabei darin, dass der bislang allein zu Gebärzwecken genutzte Raum unterhalb der Nestkammer zur Erweiterung des Bewegungsraums der Kleintiere genutzt wird. Ein anderer Punkt besteht darin, dass der erweiterte Raum als Transportkasten dient, der sich von Nestkammer und Gehege trennen lässt. Da alle im Gehege gehaltenen Jungtiere in dem Transportkasten aufnehmbar sein müssen, muss dieser grössere Abmessungen als ein üblicherweise vorgesehener Nestraum aufweisen. Da der Bewegungsraum der Kleintiere dadurch erhöht wird, sind zum einen die Anforderungen an den Tierschutz erfüllt, ohne dass eine kostspielige Modifikation der Gehege selbst notwendig wäre. Der erfindungsgemässe Stall ist damit wesentlich tierfreundlicher, tiergerechter und konsumentenverständlicher als die bekannten Ställe. Zum anderen ist eine einfachere und tiergerechte Zuführung und Entnahme, sowie eine schnellere Verladung der Jungtiere möglich.

Der Stall ist mit einer Halterung für den Transportkasten vorgesehen, an welcher dieser verschiebbar gehalten werden kann. Grundsätzlich ist zwar auch eine Befestigung des Transportkastens mit Hilfe von Klipps, Haken oder dergleichen, z.B. am Gitter des Geheges möglich. Die Verschiebbarkeit des Transportkastens macht diesen aber wie eine Schublade bedienbar, die besonders einfach und schnell aus ihrer Halterung herausziehbar und hineinsteckbar ist.

Die Halterung für den Transportkasten ist an einer Unterseite des Nestkastens ausgebildet. Zwar kann die Halterung grundsätzlich auch aus einem separaten Teil bestehen, das am Gehege angebracht wird, z. B. durch Einklippen oder Einhaken am Gitter. Eine besonders einfache Herstellung der Halterung bei zudem stabiler Führung entsteht aber dadurch, dass die Führung schon am Nestkasten selbst ausgebildet ist.

Um ein Herausspringen der Jungtiere aus dem Transportkasten zu verhindern, weist dieser eine Halterung für einen Deckel auf, durch den die oberseitige Öffnung des Transportkastens verschliessbar ist. Der Deckel kann dabei auf eine an sich bekannte Weise auf dem Transportkasten fixierbar, z.B. steckbar, klemmbar etc. sein.

Die Halterung für den Deckel ist so ausgebildet, dass der Deckel auf den Transportkasten aufgeschoben, aufgesteckt, aufgelegt oder aufgeklappt werden kann. Damit ist ein besonders schneller und zugleich einfacher Verschluss des Transportkastens möglich. Der Deckel auf den Transportkasten kann aufgeschoben werden wenn der Transportkasten unterhalb von dem Nestkasten gehalten ist. Mit anderen Worten erfordert damit das Verschliessen des Transportkastens nicht, dass dieser zunächst aus der Halterung gezogen wird, mit der Gefahr des Herausspringens der Tiere. Der Transportkasten kann damit verschlossen werden, bevor er von Nestkammer und Gehege getrennt wird.

Vorteilhafte Ausführungsformen des erfindungsgemässen Stalls sind in den Unteransprüchen angegeben.

Eine konstruktiv besonders einfache, stabile und zugleich günstig herstellbare Halterung für den Transportkasten und/oder die Halterung für den Deckel entsteht dann, wenn diese als eine Nut/Federkombination ausgeführt ist. Zum Beispiel kann eine aus Kunststoff ausgeführte Nestkammer mit einer Nut versehen sein, in der eine Feder des Transportkastens geführt wird.

Um ein sicheres und raumsparendes Stapeln der Transportkästen zu ermöglichen, ist eine Ober- und ein Unterseite des Transportkastens bevorzugt so geformt, dass der Transportkasten in einem Stapel gleicher Transportkästen gegen seitliches und/oder längliches Verrutschen blockiert ist. Dies kann z. B. in an sich bekannter Weise durch Vorsprünge geschehen, die in gegenüberliegende Aufnahmen eingreifen, oder die durch wiederum andere Vorsprünge in ihrer Seitwärts- oder Längsbewegung gehindert werden.

Zur guten Handhabung ist der Transportkasten mit seitlichen Griffen versehen, die z. B. als Bügel, Eingriffe oder Durchgriffe an bzw. in dem Transportkasten ausgebildet sind. Zudem ist der Transportkasten mit seitlichen Belüftungsöffnungen versehen, um eine ausreichende Sauerstoffzufuhr für die Kleintiere beim Heranwachsen sicherzustellen.

Der Transportkasten ist bereits durch seine Trennbarkeit von Nestkammer und Gehege leicht zu reinigen. Zur Säuberung des Nestkastens ist es bevorzugt, dass dieser an einer Aussenseite des Geheges angebracht und ebenfalls von dem Gehege trennbar ist.

Bevorzugt soll ein Nestraum in einem Gehege zur Aufzucht von Kleintieren, insbesondere von Nagern wie Hasen und/oder Kaninchen, als erweiterter Bewegungsraum und als Transportraum für die Jungtiere verwendet werden.

Die vorliegende Erfindung wird im Folgenden anhand eines konkreten Ausführungsbeispiels unter Bezugnahme auf die beigefügten Figuren erläutert. Gleiche oder gleichwirkende Teile sind mit gleichen Bezugsziffern versehen. Es zeigen:
- Figur 1: die seitliche Ansicht einer spiegelbildlich ange- ordneten Kombination von zwei erfindungsgemässen Kleintierställen, mit hintereinander liegenden Kombinationen gleicher Art;
- Figur 2: die frontseitige Ansicht der Kombination von zwei erfindungsgemässen Kleintierställen der Figur 1, mit nebeneinander liegenden Kombinationen gleicher Art, und
- Figur 3: die seitliche Ansicht einer spiegelbildlich ange- ordneten Kombination von zwei bekannten Kleintier- ställen, mit hintereinander liegenden Kombinatio- nen gleicher Art.

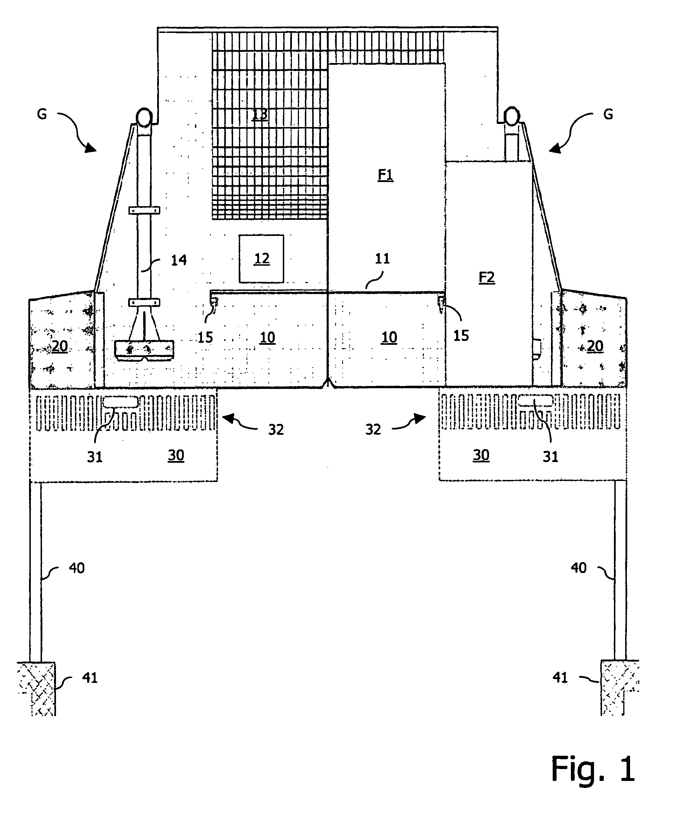

Die Figur 1 zeigt die seitliche Ansicht einer spiegelbildlich angeordneten Kombination von zwei erfindungsgemässen Kleintierställen G, mit hintereinander liegenden Kombinationen gleicher Art. Ein jeweiliger Stall G besteht dabei aus einem Gehege 10, einer Nestkammer 20 und einem Transportkasten 30. Die Kombination beider Ställe G ist über ein Gestell 40 gegen ein Fundament 41 abgestützt. Jedes Gehege 10 weist einen Zwischenboden 11 auf, über dem eine Zugriffsöffnung 12 angebracht ist. Darüber befindet sich ein keilförmig ausgebildetes Rauhfutterreservoir, das für die Tiere erreichbar ist. Der Raum, der erforderlich ist, damit sich die Tiere aufrichten und strecken können, ist die lichte Höhe, die mit den Flächen F1 und F2 angegeben ist. Zur Versorgung der Tiere ist weiterhin eine Futter- und eine Wasserstation 14 bzw. 15 vorgesehen.

Der Transportkasten 30 soll hier ähnlich einer Schublade unter die entfernte Nestkammer 20 schiebbar sein, die dazu auch vom Gehege 10 entfernt werden kann. Die erforderliche Halterung (nicht gezeigt) ist im Bereich des Kastens 30 entlang der Unterseite der Nestkammer 20 und des Geheges 10 angebracht und soll gleichzeitig flüssigkeitsablaufend ausgebildet sein. Damit ist nicht nur eine besonders stabile, sondern gleichzeitig auch eine besonders saubere und blockadefreie Führung und Halterung des Transportkastens 30 möglich. Die Halterung kann aber auch nur am Nestkasten 20 selbst ausgebildet sein, z.B. als Nut, in welcher eine Feder des Transportkastens 30 geführt wird. Eine solche Halterung wäre insbesondere bei einer Nestkammer 30 aus Kunststoff besonders einfach im Spritzgussverfahren herstellbar.

Zum Tragen des Transportkastens 30 ist dieser mit seitlich Durchgriffen 31 versehen. Zum Herausziehen der Transportkastens 30 weist dieser zusätzlich stirnseitige Durchgriffe 31' auf. Belüftungsöffnungen 32 sorgen für eine ausreichende Zufuhr von Sauerstoff im Transportkasten 30, die insbesondere dann nötig ist, wenn die Kleintiere - in übereinander gestapelten Kästen 30 - transportiert werden. Der Transportkasten 30 kann einen Deckel (nicht dargestellt) aufweisen, der seine oberseitige Öffnung verschliesst, um ein Herausspringen der Tiere beim Transport des Kastens 30 zu verhindern. Idealerweise ist dieser Deckel auf den Transportkasten 30 auf- oder einschiebbar, und kann auch dann eingeschoben oder herausgezogen werden, wenn sich der Transportkasten 30 unterhalb von Nestkasten 20 und Gehege 10 befindet. Wird der Deckel in dieser Stellung des Transportkastens 30 entfernt, haben die Kleintiere ungehinderten Zugang zur Nestkammer 20 und darüber zum Gehege 10, und umgekehrt. Bei Entnahme der Kleintiere aus dem Gehege 10 können diese z.B. über die Zugriffsöffnung 12 in den Transportkasten 30 getrieben werden, der daraufhin wieder mit dem Deckel verschlossen und der Kasten 30 von Nestkammer 20 und Gehege 10 getrennt wird.

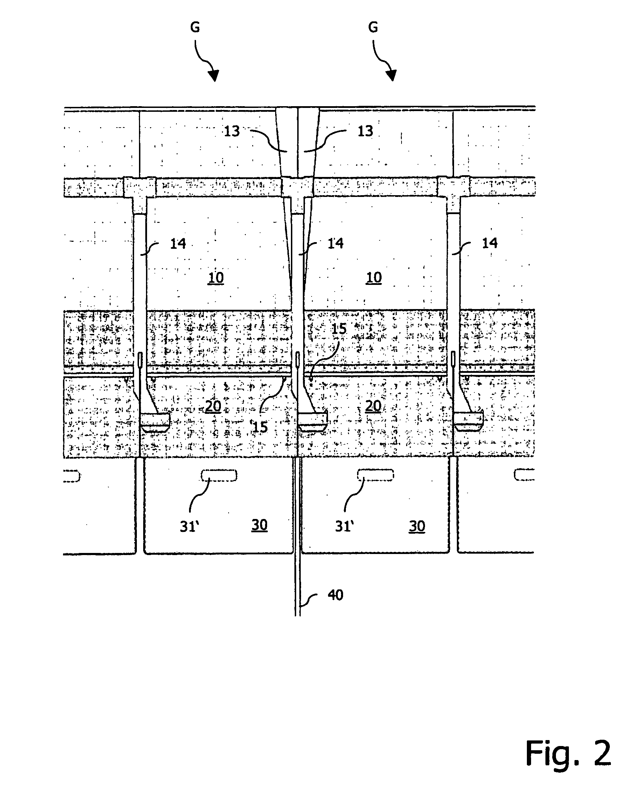

Die Figur 2 zeigt die Frontansicht der Kombination von zwei erfindungsgemässen Kleintierställen G der Figur 1, mit nebeneinander liegenden Kombinationen gleicher Art. Zu erkennen ist hier die keilförmige Ausprägung des Rauhfutterreservoirs 13 in nebeneinander liegenden Gehegen 10, die in Reihe liegenden Futter- und Wasserstationen 14 bzw. 15, sowie die einzelnen Nestkammern 20 mit jeweils darunter gehaltenen Transportkästen 30. Zur besseren Entnahme der Transportkästen 20 sind diese mit Durchgriffen 31' versehen.

Die Figur 3 zeigt die seitliche Ansicht einer spiegelbildlich angeordneten Kombination von zwei bekannten Kleintierställen G', mit hintereinander liegenden Kombinationen gleicher Art, wie sie schon eingangs erwähnt und beschrieben wurde. Der erfindungsgemässe Stall G bietet dagegen deutlich mehr Bewegungsraum für die Mutter- und die Jungtiere bei zudem besserer Handhabbarkeit und geringeren Betriebskosten. Gleichzeitig steht den Tieren ausreichend Bewegungsraum nach Tierschutzgesetz bzw. -verordnung zur Verfügung.

## Patentansprüche

1. Stall (G) zur Aufzucht von Nagerjungtieren, insbesondere von Hasen und/oder Kaninchen, mit einem Gehege (10) und mit einem Nestkasten (20) aus einem lichtundurchlässigen Material, der von einem Innenraum des Geheges (10) aus zugänglich ist, und mit einem Nestraum aus einem lichtundurchlässigen Material, der unterhalb des Nestkastens (20) angeordnet und wiederum von, diesem Nestkasten (20) aus zugänglich ist, wobei der Nestraum als langgestreckter rechteckiger Transportkasten (30) ausgebildet ist, der eine oberseitige Öffnung aufweist, und der von dem Nestkasten (20) und dem Gehege (10) trennbar ist,
bei dem eine Halterung für den Transportkasten (30) vorgesehen ist, an welcher dieser verschiebbar gehalten werden kann,
bei dem die Halterung für den Transportkasten (30) an einer Unterseite des Nestkastens (20) ausgebildet ist,
**dadurch gekennzeichnet**
bei dem der Transportkasten (30) eine Halterung für einen Deckel aufweist, durch den die oberseitige Öffnung des Transportkastens (30) verschliessbar ist,
bei dem die Halterung für den Deckel so ausgebildet ist, dass der Deckel auf den Transportkasten (30) aufgeschoben werden kann, und
bei dem der Deckel auf den Transportkasten (30) aufgeschoben, aufgesteckt, aufgelegt oder aufgeklappt werden kann, wenn der Transportkasten (30) unterhalb von dem Nestkasten (20) gehalten ist.

2. Stall (G) nach einem der Ansprüche 2 bis 6, bei dem die Halterung für den Transportkasten (30) und/oder die Halterung für den Deckel als eine Nut/Federkombination ausgeführt ist.

3. Stall (G) nach einem der vorstehenden Ansprüche, bei dem eine Ober- und ein Unterseite des Transportkastens (30) so geformt ist, dass der Transportkasten (30) in einem Stapel gleicher Transportkästen gegen seitliches und/oder längliches Verrutschen blockiert ist.

4. Stall (G) nach einem der vorstehenden Ansprüche, bei dem der Transportkasten (30) mit seitlichen Griffen (31, 31') zu seinem Transport versehen ist.

5. Stall (G) nach einem der vorstehenden Ansprüche, bei dem der Transportkasten (30) mit seitlichen Belüftungsöffnungen (32) versehen ist.

6. Stall (G) nach einem der vorstehenden Ansprüche, bei dem der Nestkasten (20) an einer Aussenseite des Geheges (10) angebracht und ebenfalls von dem Gehege trennbar ist.

7. Verwendung eines Nestraums in einem Stall gemäss einem der vorhergehenden Ansprüche zur Aufzucht von Jungtieren, insbesondere von Nagertieren, z. B. Hasen und/oder Kaninchen, als erweiterten Bewegungsraum und als Transportraum für die Tiere.

## Claims

1. Stall (G) for rearing young rodents, especially hares and/or rabbits, with an enclosure (10) and a nest box (20) of light-proof material, which is accessible from an inner room of the enclosure (10), and with a nest place of light-proof material, which is arranged beneath the nest box (20) and is again accessible from this nest box (20), wherein the nest place is constructed as an elongated rectangular transport crate (30) which shows a hole on the upper side, and which is detachable from the nest box (20) and from the enclosure (10),
wherein a holder for the transport crate (30) is envisaged, where it can be held shiftable,
wherein the holder for the transport crate (30) is constructed on a bottom side of the nest box (20),
caracterized in that
the transport crate (30) shows a holder for a cover, said holder being adapted to lock the hole on the upper side of the transport crate (30),
wherein the holder for the cover is constructed in such a way that the cover can be shifted onto the transport crate (30), and
wherein the cover can be shifted onto, clipped on, laid on or folded up over the transport crate (30), if the transport crate (30) is affixed beneath the nest box (20).

2. Stall (G) according to one of claims 2-6, wherein the holder for the transport crate (30) and/or the holder for the cover is constructed by means of a tongue and groove combination.

3. Stall (G) according to one of the preceding claims, wherein an upper side and a bottom side of the transport crate (30) is formed in a way that the transport crate (30) in a pile of the same transport crates is blocked from lateral and/or longitudinal sliding.

4. Stall (G) according to one of the preceding claims, wherein the transport crate (30) is equipped with lateral grips (31, 31') for its transport.

5. Stall (G) according to one of the preceding claims, wherein the transport crate (30) is equipped with lateral ventilation holes (32).

6. Stall (G) according to one of the preceding claims, wherein the nest box (20) is mounted on an outside of the enclosure (10) and is detachable from the enclosure (10) as well.

7. Utilization of a nest place in a stall according to one of the preceding claims for rearing young animals, especially rodents, e.g. hares and/or rabbits, as an expanded space of movement and as a transport place for the animals.

## Revendications

1. Clapier (G) pour faire l'élevage de jeunes rongeurs, notamment de lièvres et/ou de lapins, avec un enclos (10) et avec un nichoir (20) en une matière opaque, qui est accessible à partir d'un espace intérieur de l'enclos (10) et avec un espace de nichée en une matière opaque qui est placé en dessous du nichoir (20) et qui quant à lui est accessible à partir de ce nichoir (20), l'espace de nichée étant conçu sous la forme d'un caisson de transport (30) rectangulaire allongé, qui comporte une ouverture sur la face supérieure et étant séparable du nichoir (20) et de l'enclos (10),
sur lequel est prévue une fixation pour le caisson de transport (30) sur laquelle ce dernier peut être maintenu en étant déplaçable,
sur lequel la fixation pour le caisson de transport (30) est conçue sur la face inférieure du nichoir (20),
**caractérisé en ce que** le caisson de transport (30) comporte une fixation pour un couvercle, permettant de fermer l'ouverture sur la face supérieure du caisson de transport (30),
sur lequel la fixation pour le couvercle est conçue de sorte que le couvercle puisse être emboîté sur le caisson de transport (30),
sur lequel le couvercle peut être emboîté, monté, posé ou rabattu sur le caisson de transport (30), lorsque le caisson de transport (30) est maintenu en-dessous du nichoir (20).

2. Clapier (G) selon l'une quelconque des revendications 2 à 6, sur lequel la fixation pour le caisson de transport (30) et/ou la fixation pour le couvercle est conçu sous la forme d'une association rainure/languette.

3. Clapier (G) selon l'une quelconque des revendications précédentes, sur lequel une face supérieure et une face inférieure du caisson de transport (30) est conformée de sorte que le caisson de transport (30) soit bloqué dans une pile de caissons de transport identiques contre un glissement latéral et/ou longitudinal.

4. Clapier (G) selon l'une quelconque des revendications précédentes, sur lequel le caisson de transport (30) est muni de poignées latérales (31, 31') pour son transport.

5. Clapier (G) selon l'une quelconque des revendications précédentes, sur lequel le caisson de transport (30) est muni d'ouvertures d'aération (32) latérales.

6. Clapier (G) selon l'une quelconque des revendications précédentes, sur lequel le nichoir (20) est monté sur une face extérieure de l'enclos (10) et est également séparable de l'enclos.

7. Utilisation d'un espace de nichée dans un clapier selon l'une quelconque des revendications précédentes, pour l'élevage de jeunes bêtes, notamment de jeunes rongeurs, par ex. de lièvres et/ou de lapins en tant qu'espace de mobilité élargi et d'espace de transport pour les bêtes.
